# EUROPÄISCHE PATENTSCHRIFT

(11) **EP 3 605 697 B1**
(45) Veröffentlichungstag und Bekanntmachung des Hinweises auf die Patenterteilung: **23.04.2025**
(21) Anmeldenummer: 18186515.5
(22) Anmeldetag: 31.07.2018
(51) Int. Cl.: H01M 10/04

(54) **VERFAHREN ZUR HERSTELLUNG EINES ELEKTRODEN-SEPARATOR-WICKELS, ELEKTRODEN-SEPARATOR-WICKEL UND KNOPFZELLE MIT EINEM SOLCHEN WICKEL**
METHOD FOR PRODUCING AN ELECTRODE SEPARATOR COIL, ELECTRODE SEPARATOR COIL AND BUTTON CELL COMPRISING SUCH A COIL
PROCÉDÉ DE FABRICATION D'UNE BOBINE D'ÉLECTRODES-SÉPARATEUR, BOBINE D'ÉLECTRODES-SÉPARATEUR ET PILE BOUTON DOTÉE D'UNE TELLE BOBINE

(43) Veröffentlichungstag der Anmeldung: 05.02.2020
(73) Patentinhaber: VARTA Microbattery GmbH, 73479 Ellwangen Jagst (DE)
(72) Erfinder: Gaugler, Winfried, 73479 Ellwangen (DE); Maas, Wolfgang, 73494 Rosenberg (DE)
(74) Vertreter: Ostertag & Partner Patentanwälte mbB

(56) Entgegenhaltungen:
- JP-A- 2008 047 303
- US-A1- 2002 004 171
- US-A1- 2006 051 662

## Beschreibung

Die nachfolgend beschriebene Erfindung betrifft ein Verfahren zur Herstellung eines Elektroden-Separator-Wickels mit der Sequenz erster Stromkollektor / Separator / zweiter Stromkollektor / Separator oder zweiter Stromkollektor / Separator / erster Stromkollektor / Separator, ein gemäß dem Verfahren hergestellter Elektroden-Separator-Wickel und eine Knopfzelle mit diesem Wickel.

Knopfzellen weisen meist ein zylindrisches Gehäuse auf, dessen Höhe gleich seinem Durchmesser oder kleiner als dieser ist. In dem Gehäuse können sehr unterschiedliche elektrochemische Systeme enthalten sein. Sehr verbreitet sind Zellen auf Basis von Zink/Luft, Zink/MnO₂ und Nickel/Zink. Auch sekundäre (wiederaufladbare) Systeme sind sehr verbreitet. Beispiele hierfür sind Nickel/Metallhydrid-Zellen, Nickel/Cadmium-Zellen und Lithium-Ionen-Zellen.

Das Gehäuse von Knopfzellen besteht klassisch in aller Regel aus zwei festen, meist metallischen Gehäuseteilen, zwischen denen eine elektrisch isolierende Dichtung angeordnet ist. Eines der Gehäuseteile steht in elektrischer Verbindung mit der positiven Elektrode und ist entsprechend positiv gepolt. Das andere steht in elektrischer Verbindung mit der negativen Elektrode und ist entsprechend negativ gepolt. Die Dichtung soll einen elektrischen Kontakt zwischen den entgegengesetzt gepolten Gehäuseteilen unterbinden. Darüber hinaus soll sie einem Entweichen und auch einem Eindringen von Flüssigkeit oder Feuchtigkeit aus dem oder in das Gehäuse entgegenwirken.

Lithium-Ionen-Zellen können sehr hohe Energiedichten erreichen. Zellen auf Lithium-Ionen-Basis enthalten in einigen Fällen einen Verbundkörper in Form eines Zellenstapels (stack), der aus mehreren Einzelzellen besteht. Meist enthalten die Zellen aber einen gewickelten Verbundkörper (kurz: Wickel-Verbundkörper), bei dem es sich in der Regel um eine Einzelzelle in gewickelter Form handelt.

Knopfzellen mit Wickel-Verbundkörpern auf Lithium-Ionen-Basis sind beispielsweise in der WO 2010/146154 A2 und in der WO 2010/089152 A1 beschrieben. Wickel-Verbundkörper werden üblicherweise durch spiralförmiges Aufwickeln von bandförmigen Elektroden (kurz: Elektrodenbänder) und mindestens einem bandförmigen Separator (kurz: Separatorband) gefertigt. Die Elektrodenbänder und der mindestens eine bandförmige Separator liegen in dem Wickel-Verbundkörper flach aufeinander. Gegebenenfalls sind sie beispielsweise durch Lamination oder durch Verklebung miteinander verbunden.

In der Regel umfasst ein Wickel-Verbundkörper die Sequenz positive Elektrode / Separator / negative Elektrode. Häufig werden Wickel-Verbundkörper als sogenannte Bizellen mit den möglichen Sequenzen negative Elektrode / Separator / positive Elektrode / Separator / negative Elektrode oder positive Elektrode / Separator / negative Elektrode / Separator / positive Elektrode hergestellt.

Die Elektroden in Wickel-Verbundkörpern umfassen üblicherweise jeweils einen metallischen Stromkollektor sowie elektrochemisch aktive Komponenten (oft auch als Aktivmaterialien bezeichnet) und elektrochemisch inaktive Komponenten.

Die Stromkollektoren dienen dazu, die elektrochemisch aktiven Komponenten möglichst großflächig elektrisch zu kontaktieren. Sie bestehen üblicherweise aus bandförmigen, flächigen Metallsubstraten, beispielsweise aus Metallfolien oder aus einem Metallschaum oder aus einem metallisierten Vlies.

Als Aktivmaterialien kommen für sekundäre Lithium-Ionen-Systeme sämtliche Materialien in Frage, die Lithium-Ionen aufnehmen und wieder abgeben können. Stand der Technik sind diesbezüglich für die negative Elektrode sekundärer Lithium-Ionen-Systeme insbesondere Materialien auf Kohlenstoffbasis wie graphitischer Kohlenstoff oder zur Interkalation von Lithium befähigte nichtgraphitische Kohlenstoffmaterialien. Für die positive Elektrode sekundärer Lithium-Ionen-Systeme kommen beispielsweise Lithium-Metalloxid-Verbindungen und Lithium-Metallphosphat-Verbindungen wie LiCoO₂ und LiFePO₄ in Frage.

Als elektrochemisch inaktive Komponenten sind an erster Stelle Elektrodenbinder und Leitmittel zu nennen. Die Elektrodenbinder gewährleisten die mechanische Stabilität der Elektroden und sorgen für die Kontaktierung der Partikel aus elektrochemisch aktivem Material untereinander sowie zum Stromkollektor. Leitmittel wie Ruß dienen dazu, die elektrische Leitfähigkeit der Elektroden zu erhöhen.

Als Separatoren kommen für die genannten Verbundkörper insbesondere Bänder aus porösen Kunststofffolien in Frage, beispielsweise aus einem Polyolefin oder aus einem Polyetherketon. Auch Vliese und Gewebe aus diesen Materialien können zum Einsatz kommen.

Zur Herstellung von positiven und negativen Elektroden für Wickel-Verbundkörper werden üblicherweise Pasten umfassend die jeweiligen Aktivmaterialien sowie einen Elektrodenbinder und gegebenenfalls ein Leitmittel in Form dünner Schichten auf die bandförmigen Stromkollektoren aufgebracht, getrocknet und in die gewünschte Form gebracht. Üblicherweise werden die Schichten nach dem Trocknen gewalzt und gepresst. Bei intermittierendem Auftrag werden die Stromkollektoren nur abschnittweise beschichtet. Es resultieren dann bandförmige Stromkollektoren, die in Längsrichtung in mit Elektrodenmaterial bedeckte Masseabschnitte und dazwischen angeordnete, nicht mit Elektrodenmaterial bedeckte Abschnitte unterteilt sind. Zur Bildung von einzelnen Elektrodenbändern können die nur abschnittweise beschichteten Stromkollektoren beispielsweise mittels eines Schneid- oder Stanzwerkzeugs im Bereich der nicht mit Elektrodenmaterial bedeckten Abschnitte zertrennt werden.

Es ist grundsätzlich möglich, in einem ersten Schritt so gebildete positive und negative Elektrodenbänder miteinander sowie mit einem oder mehreren Separatorbändern zu einer bandförmigen Einzelzelle zu kombinieren, beispielsweise indem die Elektroden auf gegenüberliegende Seiten eines Separatorbands laminiert werden, und anschließend in einem zweiten Schritt die bandförmige Einzelzelle durch Wickeln zu einem Wickel-Verbundkörper zu verarbeiten.

Häufig ist es allerdings vorteilhafter, die nur abschnittweise beschichteten Stromkollektoren zusammen mit einem oder mehreren Separatorbändern einer Wickelvorrichtung zuzuführen und in dieser in einem Schritt den Wickel-Verbundkörper unmittelbar aus den einzelnen Bändern herzustellen. Hierzu werden die Bänder üblicherweise auf einen Wickeldorn oder einen Wickelkern aufgewickelt, wobei darauf zu achten ist, dass innerhalb des Wickels mit Elektrodenmaterial bedeckte Masseabschnitte überlappen. Der Wickelvorgang kann abgebrochen werden, wenn ein nicht mit Elektrodenmaterial bedeckter Abschnitt erreicht wird. Dieser wird dann durchtrennt, wodurch der gebildete Wickel-Verbundkörper von nachfolgenden, noch nicht gewickelten Abschnitten des intermittierend beschichteten Stromkollektors abgeschnitten wird. Im Ergebnis resultiert ein Wickel-Verbundkörper mit gewickelten Elektrodenbändern, von denen jedes mindestens einen nicht mit Elektrodenmaterial bedeckten Kontaktabschnitt aufweist.

Die Kontaktabschnitte dienen dazu, einen elektrischen Kontakt zwischen den Elektroden und den erwähnten Gehäuseteilen herzustellen. Positive Elektrodenbänder sind mit einem der eingangs erwähnten zwei Gehäuseteile einer Knopfzelle elektrisch zu verbinden, negative Elektrodenbänder mit dem anderen der zwei Gehäuseteile. Die Gehäuseteile einer Knopfzelle weisen in der Regel jeweils einen kreisrunden Boden auf. In den meisten Fällen ist es bevorzugt, die Kontaktabschnitte mit diesen kreisrunden Böden zu kontaktieren.

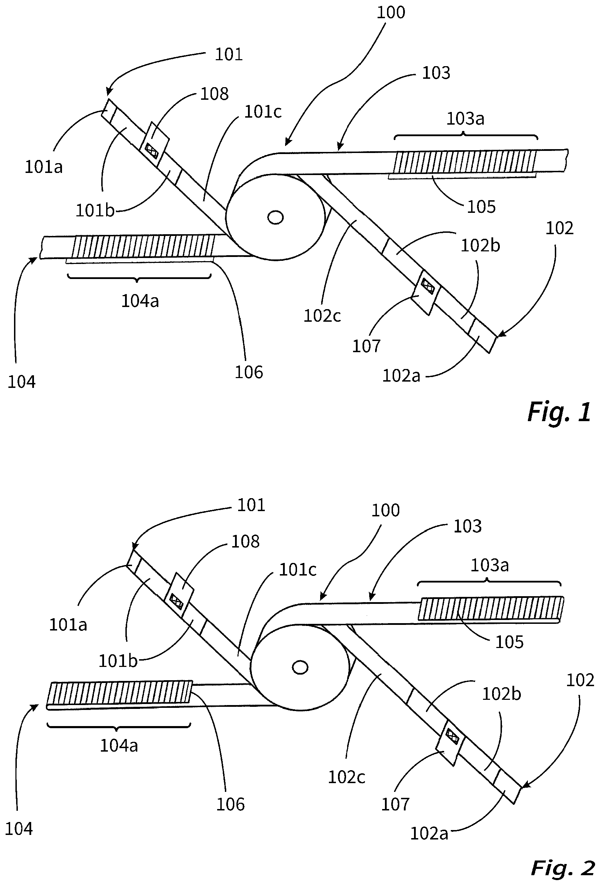

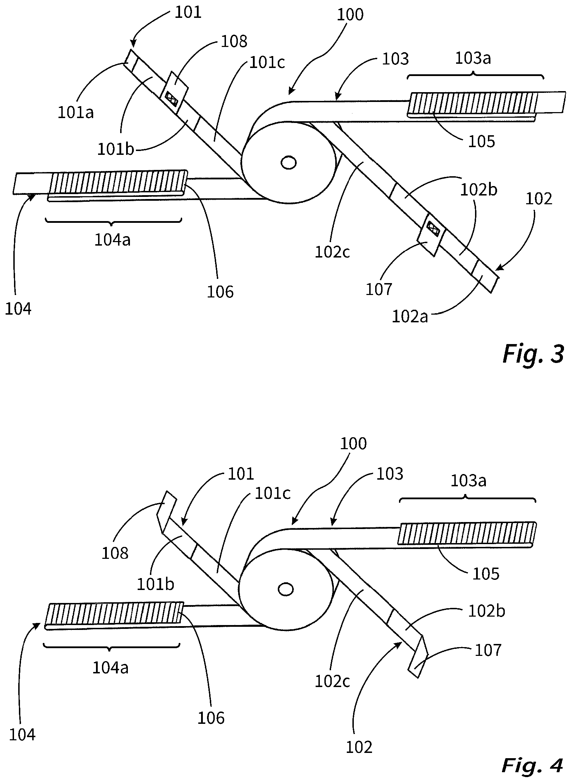

Aus der WO 2010/146154 A2 ist es bekannt, an einen massefreien Kontaktabschnitt einer Elektrode eines Wickel-Verbundkörpers einen axial in einem Winkel von 90° zur Wickelrichtung ausgerichteten Kontaktstreifen anzuschweißen und durch Umklappen flach auf einer Stirnseite des Wickel-Verbundkörpers abzulegen. Entsprechende Vorgehensweisen sind in den Figuren 2A bis 2C sowie 3A und 3B der WO 2010/146154 A2 beschrieben. Der Leiter kann dann mit einem Boden eines Gehäuseteils verschweißt werden, etwa wie es in Fig. 1A und 1B der WO 2010/146154 A2 dargestellt ist. Der Schweißvorgang erfolgt hierbei nach dem Schließen der Zelle, also von außerhalb des Knopfzellengehäuses.

Alternativ können endständige Kontaktabschnitte auch einfach umgefaltet und direkt mit einem der Gehäuseteile verschweißt werden. Der umgefaltete Teil des Kontaktabschnitts bildet dann selbst den Kontaktstreifen.

Zu Problemen kann führen, dass innerhalb der Wickel-Verbundkörper Separatorbänder in unmittelbarem Kontakt zu den Kontaktstreifen stehen. Da die Kontaktstreifen häufig scharfe Kanten aufweisen und die Separatorbänder oft nur wenige µm dick sind, also leicht beschädigt werden können, kann dies im Extremfall zu Kurzschlüssen führen. Die unmittelbar die Kontaktstreifen berührenden Bereiche der Separatorbänder sind diesbezüglich einem erhöhten Risiko ausgesetzt und werden im Folgenden daher auch als Risikobereiche bezeichnet. Um diesem Risiko entgegenzuwirken, wurde vorgeschlagen, wie in den Figuren 2B und 2C der WO 2010/146154 A2 dargestellt, die Kontaktstreifen mit Kaptonbändern anzukleben. Dies löst das beschriebene Problem, schafft aber gleichzeitig ein Neues. Es wurde nämlich beobachtet, dass der Kleber des Kaptonbandes einen negativen Einfluss auf die Zell-Performance hervorrufen kann, vermutlich hervorgerufen durch Wassereintrag oder unerwünschte Nebenreaktionen.

Aus der US 2006/0051662 A1 ist eine Elektroden-Separator-Anordnung bekannt, die zu einem Elektrodenwickel verarbeitet werden kann. Die Anordnung enthält neben zwei Separatoren eine Anode und eine Kathode, welche jeweils in Längsrichtung Abschnitte, die nicht mit Aktivmaterial beschichtet sind, aufweisen und in denen Kontaktstreifen angeschweißt sind. Die beiden Separatoren können in diesen Bereichen mit einer Folie verstärkt werden.

Der vorliegenden Erfindung lag die Aufgabe zugrunde, eine Lösung für die genannten Probleme zu schaffen.

Zur Lösung dieser Aufgabe schlägt die Erfindung ein Verfahren mit den in Anspruch 1 genannten Merkmalen sowie einen Elektroden-Separator-Wickel mit den Merkmalen des Anspruchs 5 sowie die Knopfzelle mit den Merkmalen des Anspruchs 6 vor. Weiterbildungen der Erfindung sind Gegenstand von Unteransprüchen.

Das erfindungsgemäße Verfahren umfasst stets die folgenden Schritte:
- Zuführen eines ersten bandförmigen Stromkollektors, der in Längsrichtung unterteilt ist in mit einem positiven Elektrodenmaterial bedeckte Masseabschnitte und zwischen den Masseabschnitten angeordnete, nicht mit dem Elektrodenmaterial bedeckte Kontaktabschnitte, zu einer Wickelvorrichtung,
- Zuführen eines zweiten bandförmigen Stromkollektors, der in Längsrichtung unterteilt ist in mit einem negativen Elektrodenmaterial bedeckte Masseabschnitte und zwischen den Masseabschnitten angeordnete, nicht mit dem Elektrodenmaterial bedeckte Kontaktabschnitte, zu der Wickelvorrichtung,
- Zuführen zweier bandförmiger Separatoren zu der Wickelvorrichtung, und
- Aufwickeln des ersten bandförmigen Stromkollektors, des zweiten bandförmigen Stromkollektors und der Separatoren in der Wickelvorrichtung zu einem Wickel mit der Sequenz erster Stromkollektor / Separator / zweiter Stromkollektor / Separator oder zweiter Stromkollektor / Separator / erster Stromkollektor / Separator.

Das erfindungsgemäße Verfahren unterscheidet sich soweit nicht von aus dem Stand der Technik bekannten Verfahren, weder was die beschriebenen Verfahrensschritte noch was die dabei zum Einsatz kommenden Materialien und Gegenstände anbetrifft. So kommen als Elektrodenmaterialien, Stromkollektoren und Separatoren beispielsweise die eingangs genannten Materialien, Stromkollektoren und Separatoren in Frage.

Ebenfalls wie aus dem Stand der Technik bekannt, ist es erfindungsgemäß vorgesehen, dass zur elektrischen Kontaktierung der Stromkollektoren in mindestens einem der Kontaktabschnitte ein Kontaktstreifen angeschweißt wird oder zur Ausbildung eines Kontaktstreifens zur elektrischen Kontaktierung der Stromkollektoren mindestens einer der Kontaktabschnitte umgefaltet wird. Hierzu kann beispielsweise auf die aus der WO 2010/146154 A2 bekannte Vorgehensweise zurückgegriffen werden.

Hingegen zeichnet sich das erfindungsgemäße Verfahren gegenüber dem bekannten Stand der Technik dadurch aus,
- dass mindestens einer der Separatoren in mindestens einem Risikobereich, in dem der mindestens eine Separator innerhalb des fertiggestellten Elektroden-Separator-Wickels an dem mindestens einen Kontaktabschnitt, in dem der Kontaktstreifen angeschweißt wird, oder an dem mindestens einen zur Ausbildung eines Kontaktstreifens umgefalteten Kontaktabschnitt, anliegt, verstärkt wird.

Der Begriff Risikobereich wurde eingangs bereits erläutern, es handelt sich hierbei um einen Bereich des Separators, der aufgrund eines unmittelbaren Kontakts mit einem Kontaktstreifen einem erhöhten Risiko einer Beschädigung ausgesetzt ist, in deren Folge ein Kurzschluss auftreten könnte.

Unter einer Verstärkung des Separators in dem Risikobereich soll verstanden werden, dass der Separator in dem Risikobereich eine größere Dicke aufweist. Dadurch kann dem beschriebenen Kurzschlussrisiko ebenso gut entgegengewirkt werden wie im Fall der Kapton-Bänder. Allerdings treten die mit diesen verbundenen Nachteile nicht zwingend auf, was im Folgenden noch erläutert wird.

Besonders bevorzugt zeichnet sich das Verfahren durch mindestens eines der zwei unmittelbar folgenden folgenden Merkmale aus:
- Des erste und der zweite Stromkollektor werden im Bereich zweier Kontaktabschnitte unter jeweiliger Bildung eines endständigen Kontaktabschnitts durchtrennt und die Separatoren werden jeweils unter Bildung eines endständigen Separatorabschnitts durchtrennt.
- Der Elektroden-Separator-Wickel wird durch Aufwickeln der endständigen Kontaktabschnitte und der endständigen Separatorabschnitte fertiggestellt.

In einigen besonders bevorzugten Ausführungsformen zeichnet sich das Verfahren durch eines der folgenden Merkmale aus:
- Zur Ausbildung des Kontaktstreifens zur elektrischen Kontaktierung der Stromkollektoren wird mindestens einer der endständigen Kontaktabschnitte umgefaltet.
- Der mindestens eine Kontaktabschnitt, in dem der Kontaktstreifen angeschweißt wird, ist ein endständiger Kontaktabschnitt oder aber ein nicht endständiger, zwischen zwei Masseabschnitten angeordneter Kontaktabschnitt.

In Ausführungsformen, bei denen zur elektrischen Kontaktierung der Stromkollektoren in mindestens einem der Kontaktabschnitte ein Kontaktstreifen angeschweißt wird, ist es meist bevorzugt, dass der Kontaktstreifen in einem Winkel von 45° bis 135° zur Haupterstreckungsrichtung des bandförmigen Stromkollektors angeschweißt wird.

In Ausführungsformen, bei denen zur Ausbildung eines Kontaktstreifens zur elektrischen Kontaktierung der Stromkollektoren mindestens einer der endständigen Kontaktabschnitte umgefaltet wird, ist es meist bevorzugt, dass der mindestens eine endständige Kontaktabschnitt durch eine Faltung entlang einer in einem Winkel von 10° bis 80° zur Haupterstreckungsrichtung des bandförmigen Stromkollektors ausgerichteten Faltlinie umgefaltet wird. Er umfasst dann bevorzugt einen umgefalteten, streifenförmigen Teilabschnitt und einen nicht umgefalteten Teilabschnitt.

Zur Klarstellung: Unter der Haupterstreckungsrichtung des bandförmigen Stromkollektors ist die Richtung zu verstehen, in der der Stromkollektor im flach ausgebreiteten Zustand seine größte Ausdehnung besitzt.

Bevorzugt werden beide bandförmigen Separatoren in den Risikobereichen verstärkt, nicht nur einer der Separatoren.

Erfindungsgemäß werden die Verstärkungen durch eine Faltung der Separatoren gebildet, insbesondere durch eine Z-Faltung.

Der erfindungsgemäße Elektroden-Separator-Wickel umfasst stets
- einen ersten bandförmigen Stromkollektor, der in Längsrichtung unterteilt ist in mindestens einen mit einem positiven Elektrodenmaterial bedeckten Masseabschnitt und mindestens einen nicht mit dem Elektrodenmaterial bedeckten Kontaktabschnitt,
- einen zweiten bandförmigen Stromkollektor, der in Längsrichtung unterteilt ist in mindestens einen mit einem negativen Elektrodenmaterial bedeckten Masseabschnitt und mindestens einen nicht mit dem Elektrodenmaterial bedeckten Kontaktabschnitt, und
- zwei bandförmige Separatoren
wobei
- der erste bandförmige Stromkollektor, der zweite bandförmige Stromkollektor und die Separatoren zu einem Wickel mit der Sequenz erster Stromkollektor / Separator / zweiter Stromkollektor / Separator oder zweiter Stromkollektor / Separator / erster Stromkollektor / Separator aufgewickelt sind, und
- zur elektrischen Kontaktierung der Stromkollektoren in mindestens einem der Kontaktabschnitte ein Kontaktstreifen angeschweißt ist oder zur Ausbildung eines Kontaktstreifens zur elektrischen Kontaktierung der Stromkollektoren mindestens einer der Kontaktabschnitte umgefaltet ist.

Der erfindungsgemäße Elektroden-Separator-Wickel ist gemäß dem oben beschriebenen Verfahren herstellbar. Er zeichnet sich entsprechend insbesondere dadurch aus, dass
- mindestens einer der Separatoren in mindestens einem Risikobereich, in dem der mindestens eine Separator innerhalb des Elektroden-Separator-Wickels an dem mindestens einen Kontaktabschnitt, in dem der Kontaktstreifen angeschweißt ist, oder an dem mindestens einen zur Ausbildung eines Kontaktstreifens umgefalteten Kontaktabschnitt, anliegt, durch Faltung verstärkt ist.

Bevorzugte Ausführungsformen des Elektroden-Separator-Wickels ergeben sich aus der obigen Beschreibung des erfindungsgemäßen Verfahrens, sowohl, was die zum Einsatz kommenden Materialien und Gegenstände, als auch, was die unterschiedlichen Ausführungsformen der Verstärkung, anbetrifft.

Jede Knopfzelle, die den beschriebenen Elektroden-Separator-Wickel, insbesondere den gemäß dem erfindungsgemäßen Verfahren herstellbaren Elektroden-Separator-Wickel, umfasst, ist Gegenstand der vorliegenden Erfindung.

Die erfindungsgemäße Knopfzelle kann beispielsweise ein Gehäuse wie in Fig. 4 der WO 2010/089152 A1 oder wie in Fig. 1 der WO 2010/146154 A2 aufweisen. Die Gehäuse weisen jeweils kreisrunde Böden auf. Der beschriebene Elektroden-Separator-Wickel ist in den Gehäusen derart angeordnet, dass seine Stirnseiten in Richtung der kreisrunden Böden weisen, gegebenenfalls sogar flach an diesen anliegen.

Die Verschweißung der Gehäuseteile mit den Kontaktstreifen kann beispielsweise erfolgen, wie es in Fig. 1A und 1B der WO 2010/146154 A2 dargestellt ist.

Die Abdichtung der Knopfzelle erfolgt bevorzugt durch eine übliche Spritzguss- oder Foliendichtungen.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnungen. Hierbei zeigen schematisch:
Figur 1 illustriert eine nicht erfindungsgemäße Verfahrensvariante, bei der zwei Separatoren in jeweils einem Risikobereich durch Fixierung von mit den Separatoren verschweißbaren Folien auf den Separatoren verstärkt sind. In den Risikobereichen berühren die Separatoren nach Fertigstellung des Elektroden-Separator-Wickels jeweils Kontaktabschnitte von Stromkollektoren, in denen Kontaktstreifen angeschweißt sind. Die Fixierung ist durch Verschweißung der Folien mit dem Separator gewährleistet;
Figur 2 illustriert eine erste Ausführungsform des erfindungsgemäßen Verfahrens, bei der zwei Separatoren in jeweils einem Risikobereich durch endständiges Umfalten der Separatoren verstärkt sind. In den Risikobereichen berühren die Separatoren nach Fertigstellung des Elektroden-Separator-Wickels jeweils Kontaktabschnitte von Stromkollektoren, in denen Kontaktstreifen angeschweißt sind;
Figur 3 illustriert eine zweite Ausführungsform des erfindungsgemäßen Verfahrens, bei der zwei Separatoren in jeweils einem Risikobereich durch eine Z-Faltung der Separatoren verstärkt sind. In den Risikobereichen berühren die Separatoren nach Fertigstellung des Elektroden-Separator-Wickels jeweils Kontaktabschnitte von Stromkollektoren, in denen Kontaktstreifen angeschweißt sind;
Figur 4 illustriert eine dritte Ausführungsform des erfindungsgemäßen Verfahrens, bei der zwei Separatoren in jeweils einem Risikobereich durch endständiges Umfalten der Separatoren verstärkt sind. In den Risikobereichen berühren die Separatoren nach Fertigstellung des Elektroden-Separator-Wickels jeweils Kontaktabschnitte von Stromkollektoren, in denen die Stromkollektoren zur Ausbildung von Kontaktstreifen zur elektrischen Kontaktierung der Stromkollektoren durch eine Faltung entlang zweier jeweils in einem Winkel von 45° zur Haupterstreckungsrichtung der bandförmigen Stromkollektoren ausgerichteten Faltlinien umgefaltet sind; und

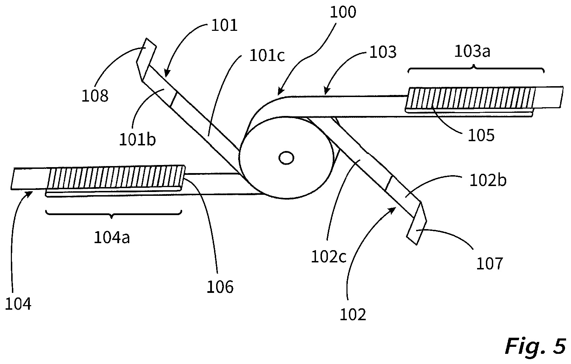

Figur 5 illustriert eine vierte Ausführungsform des erfindungsgemäßen Verfahrens, bei der zwei Separatoren in jeweils einem Risikobereich durch eine Z-Faltung der Separatoren verstärkt sind. In den Risikobereichen berühren die Separatoren nach Fertigstellung des Elektroden-Separator-Wickels jeweils Kontaktabschnitte von Stromkollektoren, in denen die Stromkollektoren zur Ausbildung von Kontaktstreifen zur elektrischen Kontaktierung der Stromkollektoren durch eine Faltung entlang zweier jeweils in einem Winkel von 45° zur Haupterstreckungsrichtung der bandförmigen Stromkollektoren ausgerichteten Faltlinien umgefaltet sind.

Gemäß dem in **Fig.** 1 dargestellten Verfahren werden ein erster bandförmiger Stromkollektor 101, der in Längsrichtung unterteilt ist in mit einem positiven Elektrodenmaterial bedeckte Masseabschnitte (Abschnitte 101a und 101c) und zwischen den Masseabschnitten angeordnete, nicht mit dem Elektrodenmaterial bedeckte Kontaktabschnitte (Abschnitt 101b), ein zweiter bandförmiger Stromkollektor 102, der in Längsrichtung unterteilt ist in mit einem negativen Elektrodenmaterial bedeckte Masseabschnitte (Abschnitte 102a und 102c) und zwischen den Masseabschnitten angeordnete, nicht mit dem Elektrodenmaterial bedeckte Kontaktabschnitte (Abschnitt 102b), und zwei bandförmige Separatoren 103 und 104 zu einem Elektroden-Separator-Wickel 100 verarbeitet.

Die zwei Separatoren 103 und 104 sind in den Risikobereichen 103a und 104a (schraffierte Darstellung) durch die Folien 105 und 106 verstärkt. Die Folien 105 und 106 sind durch Verschweißung auf den Separatoren 103 und 104 fixiert. In den Risikobereichen 103a und 104a liegen die Separatoren 103 und 104 nach der Fertigstellung des Elektroden-Separator-Wickels an den den Kontaktabschnitten 101b und 102b der Stromkollektoren 101 und 102 an. In diesen Kontaktabschnitten 101b und 102b sind die Kontaktstreifen 107 und 108 angeschweißt. In Folge der Verstärkung kann das Kurzschlussrisiko in den Risikobereichen 103a und 104a minimiert werden.

Gemäß dem in **Fig. 2** dargestellten Verfahren werden ein erster bandförmiger Stromkollektor 101, der in Längsrichtung unterteilt ist in mit einem positiven Elektrodenmaterial bedeckte Masseabschnitte (Abschnitte 101a und 101c) und zwischen den Masseabschnitten angeordnete, nicht mit dem Elektrodenmaterial bedeckte Kontaktabschnitte (Abschnitt 101b), ein zweiter bandförmiger Stromkollektor 102, der in Längsrichtung unterteilt ist in mit einem negativen Elektrodenmaterial bedeckte Masseabschnitte (siehe Abschnitte 102a und 102c) und zwischen den Masseabschnitten angeordnete, nicht mit dem Elektrodenmaterial bedeckte Kontaktabschnitte (Abschnitt 102b), und zwei bandförmige Separatoren 103 und 104 zu einem Elektroden-Separator-Wickel 100 verarbeitet.

Die zwei Separatoren 103 und 104 sind in den Risikobereichen 103a und 104a (schraffiert dargestellt) durch die Folien 105 und 106 verstärkt. Bei den Folien 105 und 106 handelt es sich hier um endständig einfach umgefaltete Abschnitte der Separatoren 103 und 104. In den Risikobereichen 103a und 104a liegen die Separatoren 103 und 104 nach der Fertigstellung des Elektroden-Separator-Wickels an den Kontaktabschnitten 101b und 102b der Stromkollektoren 101 und 102 an. In diesen Kontaktabschnitten 101b und 102b sind die Kontaktstreifen 107 und 108 angeschweißt. In Folge der Verstärkung kann das Kurzschlussrisiko in den Risikobereichen 103a und 104a minimiert werden.

Gemäß dem in **Fig. 3** dargestellten Verfahren werden ein erster bandförmiger Stromkollektor 101, der in Längsrichtung unterteilt ist in mit einem positiven Elektrodenmaterial bedeckte Masseabschnitte (Abschnitte 101a und 101c) und zwischen den Masseabschnitten angeordnete, nicht mit dem Elektrodenmaterial bedeckte Kontaktabschnitte (Abschnitt 101b), ein zweiter bandförmiger Stromkollektor 102, der in Längsrichtung unterteilt ist in mit einem negativen Elektrodenmaterial bedeckte Masseabschnitte (Abschnitte 102a und 102c) und zwischen den Masseabschnitten angeordnete, nicht mit dem Elektrodenmaterial bedeckte Kontaktabschnitte (Abschnitt 102b), und zwei bandförmige Separatoren 103 und 104 zu einem Elektroden-Separator-Wickel 100 verarbeitet.

Die zwei Separatoren 103 und 104 sind in den Risikobereichen 103a und 104a (schraffiert dargestellt) durch die Folien 105 und 106 verstärkt. Bei den Folien 105 und 106 handelt es sich hier um in Z-Form umgefaltete Abschnitte der Separatoren 103 und 104. In den Risikobereichen 103a und 104a liegen die Separatoren 103 und 104 nach der Fertigstellung des Elektroden-Separator-Wickels an den Kontaktabschnitten 101b und 102b der Stromkollektoren. In diesen Kontaktabschnitten 101b und 102b sind die Kontaktstreifen 107 und 108 angeschweißt. In Folge der Verstärkung kann das Kurzschlussrisiko in den Risikobereichen 103a und 104a minimiert werden

Gemäß dem in **Fig. 4** dargestellten Verfahren werden ein erster bandförmiger Stromkollektor 101, der in Längsrichtung unterteilt ist in mit einem positiven Elektrodenmaterial bedeckte Masseabschnitte (Abschnitt 101a und 101c) und zwischen den Masseabschnitten angeordnete, nicht mit dem Elektrodenmaterial bedeckte Kontaktabschnitte (Abschnitt 101b), ein zweiter bandförmiger Stromkollektor 102, der in Längsrichtung unterteilt ist in mit einem negativen Elektrodenmaterial bedeckte Masseabschnitte (Abschnitte 102a und 102c) und zwischen den Masseabschnitten angeordnete, nicht mit dem Elektrodenmaterial bedeckte Kontaktabschnitte (Abschnitt 102b), und zwei bandförmige Separatoren 103 und 104 zu einem Elektroden-Separator-Wickel 100 verarbeitet.

Die zwei Separatoren 103 und 104 sind in den Risikobereichen 103a und 104a (schraffiert dargestellt) durch die Folien 105 und 106 verstärkt. Bei den Folien 105 und 106 handelt es sich hier um endständig einfach umgefaltete Abschnitte der Separatoren 103 und 104. In den Risikobereichen 103a und 104a liegen die Separatoren 103 und 104 nach der Fertigstellung des Elektroden-Separator-Wickels an den Kontaktabschnitten 101b und 102b der Stromkollektoren 101 und 102 an. In diesen Kontaktabschnitten 101b und 102b sind die Stromkollektoren 101 und 102 zur Ausbildung von Kontaktstreifen 107 und 108 zur elektrischen Kontaktierung der Stromkollektoren 101 und 102 jeweils durch eine Faltung entlang zweier in einem Winkel von ca. 45° zur Haupterstreckungsrichtung der bandförmigen Stromkollektoren 101 und 102 ausgerichteten Faltlinien 109 und 110 umgefaltet. In Folge der Verstärkung kann das Kurzschlussrisiko in den Risikobereichen 103a und 104a minimiert werden

Gemäß dem in **Fig. 5** dargestellten Verfahren werden ein erster bandförmiger Stromkollektor 101, der in Längsrichtung unterteilt ist in mit einem positiven Elektrodenmaterial bedeckte Masseabschnitte (Abschnitte 101a und 101c) und zwischen den Masseabschnitten angeordnete, nicht mit dem Elektrodenmaterial bedeckte Kontaktabschnitte (Abschnitt 101b), ein zweiter bandförmiger Stromkollektor 102, der in Längsrichtung unterteilt ist in mit einem negativen Elektrodenmaterial bedeckte Masseabschnitte (Abschnitte 102a und 102c) und zwischen den Masseabschnitten angeordnete, nicht mit dem Elektrodenmaterial bedeckte Kontaktabschnitte (Abschnitt 102b), und zwei bandförmige Separatoren 103 und 104 zu einem Elektroden-Separator-Wickel 100 verarbeitet.

Die zwei Separatoren 103 und 104 sind in den Risikobereichen 103a und 104a (schraffiert dargestellt) durch die Folien 105 und 106 verstärkt. Bei den Folien 105 und 106 handelt es sich hier um in Z-Form umgefaltete Abschnitte der Separatoren 103 und 104. In den Risikobereichen 103a und 104a liegen die Separatoren 103 und 104 nach der Fertigstellung des Elektroden-Separator-Wickels an den Kontaktabschnitten 101b und 102b der Stromkollektoren 101 und 102 an. In diesen Kontaktabschnitten 101b und 102b sind die Stromkollektoren 101 und 102 zur Ausbildung von Kontaktstreifen 107 und 108 zur elektrischen Kontaktierung der Stromkollektoren 101 und 102 jeweils durch eine Faltung entlang zweier in einem Winkel von ca. 45° zur Haupterstreckungsrichtung der bandförmigen Stromkollektoren 101 und 102 ausgerichteten Faltlinien 109 und 110 umgefaltet. In Folge der Verstärkung kann das Kurzschlussrisiko in den Risikobereichen 103a und 104a minimiert werden

## Patentansprüche

1. Verfahren zur Herstellung eines Elektroden-Separator-Wickels (100), umfassend die Schritte
1.1 Zuführen eines ersten bandförmigen Stromkollektors (101), der in Längsrichtung unterteilt ist in mit einem positiven Elektrodenmaterial bedeckte Masseabschnitte (101a und 101c) und zwischen den Masseabschnitten (101a und 101c) angeordnete, nicht mit dem Elektrodenmaterial bedeckte Kontaktabschnitte (101b), zu einer Wickelvorrichtung,
1.2 Zuführen eines zweiten bandförmigen Stromkollektors (102), der in Längsrichtung unterteilt ist in mit einem negativen Elektrodenmaterial bedeckte Masseabschnitte (102a und 102c) und zwischen den Masseabschnitten (102a und 102c) angeordnete, nicht mit dem Elektrodenmaterial bedeckte Kontaktabschnitte (102b), zu der Wickelvorrichtung,
1.3 Zuführen zweier bandförmiger Separatoren (103 und 104) zu der Wickelvorrichtung,
1.4 Aufwickeln des ersten bandförmigen Stromkollektors (101), des zweiten bandförmigen Stromkollektors (102) und der Separatoren (103 und 104) in der Wickelvorrichtung zu einem Wickel mit der Sequenz erster Stromkollektor (101) / Separator (103) / zweiter Stromkollektor (102) / Separator (104) oder zweiter Stromkollektor (102) / Separator (103) / erster Stromkollektor (101) / Separator (104),
wobei
1.7 zur elektrischen Kontaktierung der Stromkollektoren (101 und 102) in mindestens einem der Kontaktabschnitte (101b und 102b) ein Kontaktstreifen (107, 108) angeschweißt wird oder zur Ausbildung eines Kontaktstreifens (107, 108) zur elektrischen Kontaktierung der Stromkollektoren (101 und 102) mindestens einer der Kontaktabschnitte (101b und 102b) umgefaltet wird,
**dadurch gekennzeichnet, dass**
1.8 mindestens einer der Separatoren (103 und 104) in mindestens einem Risikobereich (103a, 104a), in dem der mindestens eine Separator (103 und 104) innerhalb des fertiggestellten Elektroden-Separator-Wickels an dem mindestens einen Kontaktabschnitt (101b und 102b), in dem der Kontaktstreifen (107, 108) angeschweißt wird, oder an dem mindestens einen zur Ausbildung eines Kontaktstreifens (107, 108) umgefalteten Kontaktabschnitt (101b und 102b), anliegt, verstärkt wird, wobei die Verstärkung durch Faltung des Separators gebildet wird.

2. Verfahren nach Anspruch 1 mit den folgenden zusätzlichen Schritten
2.1 Des erste und der zweite Stromkollektor (101 und 102) werden im Bereich zweier Kontaktabschnitte (101b und 102b) unter jeweiliger Bildung eines endständigen Kontaktabschnitts durchtrennt und die Separatoren (103 und 104) werden jeweils unter Bildung eines endständigen Separatorabschnitts durchtrennt.
2.2 Der Elektroden-Separator-Wickel (100) wird durch Aufwickeln der endständigen Kontaktabschnitte und der endständigen Separatorabschnitte fertiggestellt.

3. Verfahren nach Anspruch 2 mit dem zusätzlichen Schritt
3.1 Zur Ausbildung des Kontaktstreifens (107, 108) zur elektrischen Kontaktierung der Stromkollektoren (101 und 102) wird mindestens einer der endständigen Kontaktabschnitte umgefaltet.

4. Verfahren nach einem der vorhergehenden Ansprüche mit dem zusätzlichen Schritt
4.1 Die Verstärkungen werden durch Z-Faltung der Separatoren (103 und 104) gebildet.

5. Elektroden-Separator-Wickel (100), umfassend
5.1 einen ersten bandförmigen Stromkollektor (101), der in Längsrichtung unterteilt ist in mindestens einen mit einem positiven Elektrodenmaterial bedeckten Masseabschnitt (101a und 101c) und mindestens einen nicht mit dem Elektrodenmaterial bedeckten Kontaktabschnitt (101b),
5.2 einen zweiten bandförmigen Stromkollektor (102), der in Längsrichtung unterteilt ist in mindestens einen mit einem negativen Elektrodenmaterial bedeckten Masseabschnitt (102a und 102c) und mindestens einen nicht mit dem Elektrodenmaterial bedeckten Kontaktabschnitt (102b),
5.3 zwei bandförmige Separatoren (103 und 104)
wobei
5.4 der erste bandförmige Stromkollektor (101), der zweite bandförmige Stromkollektor (102) und die Separatoren (103 und 104) zu einem Wickel mit der Sequenz erster Stromkollektor (101) / Separator (103) / zweiter Stromkollektor (102) / Separator (104) oder zweiter Stromkollektor (102) / Separator (103) / erster Stromkollektor (101) / Separator (104) aufgewickelt sind,
5.5 zur elektrischen Kontaktierung der Stromkollektoren (101 und 102) in mindestens einem der Kontaktabschnitte (101b und 102b) ein Kontaktstreifen (107, 108) angeschweißt ist oder zur Ausbildung eines Kontaktstreifens (107, 108) zur elektrischen Kontaktierung der Stromkollektoren (101 und 102) mindestens einer der Kontaktabschnitte (101b und 102b) umgefaltet ist,
**dadurch gekennzeichnet, dass**
5.6 mindestens einer der Separatoren (103 und 104) in mindestens einem Risikobereich (103a, 104a), in dem der mindestens eine Separator (103 und 104) innerhalb des Elektroden-Separator-Wickels an dem mindestens einen Kontaktabschnitt (101b und 102b), in dem der Kontaktstreifen (107, 108) angeschweißt ist, oder an dem mindestens einen zur Ausbildung eines Kontaktstreifens (107, 108) umgefalteten Kontaktabschnitt (101b und 102b), anliegt, verstärkt ist, wobei die Verstärkung durch eine Faltung des Separators gebildet ist.

6. Knopfzelle, umfassend einen Elektroden-Separator-Wickel (100) nach Anspruch 5.

## Claims

1. Method for producing an electrode-separator winding (100), comprising the steps of
1.1 feeding a first current collector in strip form (101), which is divided in the longitudinal direction into mass sections (101a and 101c) covered with a positive electrode material and, arranged between the mass sections (101a and 101c), contact sections (101b) not covered with the electrode material, to a winding device,
1.2 feeding a second current collector in strip form (102), which is divided in the longitudinal direction into mass sections (102a and 102c) covered with a negative electrode material and, arranged between the mass sections (102a and 102c), contact sections (102b) not covered with the electrode material, to the winding device,
1.3 feeding two separators in strip form (103 and 104) to the winding device,
1.4 winding up the first current collector in strip form (101), the second current collector in strip form (102) and the separators (103 and 104) in the winding device to form a winding with the sequence first current collector (101) / separator (103) / second current collector (102) / separator (104) or second current collector (102) / separator (103) / first current collector (101) / separator (104),
wherein
1.5 a contact strip (107, 108) is welded on in at least one of the contact sections (101b and 102b) for the electrical contacting of the current collectors (101 and 102), or at least one of the contact sections (101b and 102b) is folded over to form a contact strip (107, 108) for the electrical contacting of the current collectors (101 and 102),
**characterized in that**
1.6 at least one of the separators (103 and 104) is reinforced in at least one risk region (103a, 104a) in which the at least one separator (103 and 104) within the completed electrode-separator winding lies against the at least one contact section (101b and 102b) in which the contact strip (107, 108) is welded on or against the at least one contact section (101b and 102b) folded over to form a contact strip (107, 108), wherein the reinforcement is formed by a folding of the separator.

2. Method according to Claim 1, with the following additional steps
2.1 the first current collector (101) and second current collector (102) are cut through in the region of two contact sections (101b and 102b), in each case forming a contact section at the end, and the separators (103 and 104) are cut through, in each case forming a separator section at the end;
2.2 the electrode-separator winding (100) is completed by winding up the contact sections at the ends and the separator sections at the ends.

3. Method according to Claim 2, with the additional step that
3.1 to form the contact strip (107, 108) for the electrical contacting of the current collectors (101 and 102), at least one of the contact sections at the ends is folded over.

4. Method according to one of the preceding claims, with the additional step that
4.1 the reinforcements are formed by a Z-folding of the separators (103 and 104).

5. Electrode-separator winding (100), comprising
5.1 a first current collector in strip form (101), which is divided in the longitudinal direction into at least one mass section (101a and 101c) covered with a positive electrode material and at least one contact section (101b) not covered with the electrode material,
5.2 a second current collector in strip form (102), which is divided in the longitudinal direction into at least one mass section (102a and 102c) covered with a negative electrode material and at least one contact section (102b) not covered with the electrode material,
5.3 two separators in strip form (103 and 104)
wherein
5.4 the first current collector in strip form (101), the second current collector in strip form (102) and the separators (103 and 104) are wound up to form a winding with the sequence first current collector (101) / separator (103) / second current collector (102) / separator (104) or second current collector (102) / separator (103) / first current collector (101) / separator (104),
5.5 a contact strip (107, 108) is welded on in at least one of the contact sections (101b and 102b) for the electrical contacting of the current collectors (101 and 102), or at least one of the contact sections (101b and 102b) is folded over to form a contact strip (107, 108) for the electrical contacting of the current collectors (101 and 102),
**characterized in that**
5.6 at least one of the separators (103 and 104) is reinforced in at least one risk region (103a, 104a) in which the at least one separator (103 and 104) within the electrode-separator winding lies against the at least one contact section (101b and 102b) in which the contact strip (107, 108) is welded on or against the at least one contact section (101b and 102b) folded over to form a contact strip (107, 108), wherein the reinforcement is formed by a folding of the separator.

6. Button cell, comprising an electrode-separator winding (100) according to Claim 5.

## Revendications

1. Procédé permettant de fabriquer un enroulement d'électrodes/séparateurs (100), comprenant les étapes consistant à
1.1 amener à un dispositif d'enroulement un premier collecteur de courant (101) en forme de bande qui est divisé dans la direction longitudinale en parties de masse (101a et 101c) recouvertes d'un matériau d'électrode positif et en parties de contact (101b) disposées entre les parties de masse (101a et 101c), non recouvertes du matériau d'électrode,
1.2 amener au dispositif d'enroulement un deuxième collecteur de courant (102) en forme de bande qui est divisé dans la direction longitudinale en parties de masse (102a et 102c) recouvertes d'un matériau d'électrode négatif et en parties de contact (102b) disposées entre les parties de masse (102a et 102c), non recouvertes du matériau d'électrode,
1.3 amener au dispositif d'enroulement deux séparateurs (103 et 104) en forme de bande,
1.4 enrouler le premier collecteur de courant (101) en forme de bande, le deuxième collecteur de courant (102) en forme de bande et les séparateurs (103 et 104) dans le dispositif d'enroulement en un enroulement ayant la séquence premier collecteur de courant (101)/ séparateur (103)/ deuxième collecteur de courant (102)/ séparateur (104) ou deuxième collecteur de courant (102)/ séparateur (103)/ premier collecteur de courant (101)/ séparateur (104),
dans lequel
1.7 une bande de contact (107, 108) est soudée dans au moins l'une des parties de contact (101b et 102b) pour la mise en contact électrique des collecteurs de courant (101 et 102), ou au moins l'une des parties de contact (101b et 102b) est repliée pour réaliser une bande de contact (107, 108) pour la mise en contact électrique des collecteurs de courant (101 et 102),
**caractérisé en ce que**
1.8 au moins l'un des séparateurs (103 et 104) est renforcé dans au moins une zone à risque (103a, 104a) dans laquelle ledit au moins un séparateur (103 et 104) à l'intérieur de l'enroulement d'électrodes/séparateurs fini est adjacent à ladite au moins une partie de contact (101b et 102b) dans laquelle la bande de contact (107, 108) est soudée, ou à ladite au moins une partie de contact (101b et 102b) repliée pour réaliser une bande de contact (107, 108), le renforcement étant formé par le pliage du séparateur.

2. Procédé selon la revendication 1, comprenant les étapes supplémentaires suivantes
2.1 le premier et le deuxième collecteur de courant (101 et 102) sont sectionnés dans la zone de deux parties de contact (101b et 102b) en formant respectivement une partie de contact terminale, et les séparateurs (103 et 104) sont sectionnés respectivement en formant une partie de séparateur terminale,
2.2 l'enroulement d'électrodes/séparateurs (100) est achevé en enroulant les parties de contact terminales et les parties de séparateur terminales.

3. Procédé selon la revendication **2,** comprenant l'étape supplémentaire
3.1 au moins l'une des parties de contact terminales est repliée pour réaliser la bande de contact (107, 108) pour la mise en contact électrique des collecteurs de courant (101 et 102).

4. Procédé selon l'une quelconque des revendications précédentes, comprenant l'étape supplémentaire
4.1 les renforcements sont formés par un pliage en Z des séparateurs (103 et 104).

5. Enroulement d'électrodes/séparateurs (100), comprenant
5.1 un premier collecteur de courant (101) en forme de bande qui est divisé dans la direction longitudinale en au moins une partie de masse (101a et 101c) recouverte d'un matériau d'électrode positif et en au moins une partie de contact (101b) non recouverte du matériau d'électrode,
5.2 un deuxième collecteur de courant (102) en forme de bande qui est divisé dans la direction longitudinale en au moins une partie de masse (102a et 102c) recouverte d'un matériau d'électrode négatif et en au moins une partie de contact (102b) non recouverte du matériau d'électrode,
5.3 deux séparateurs (103 et 104) en forme de bande,
dans lequel
5.4 le premier collecteur de courant (101) en forme de bande, le deuxième collecteur de courant (102) en forme de bande et les séparateurs (103 et 104) sont enroulés en un enroulement ayant la séquence premier collecteur de courant (101)/ séparateur (103)/ deuxième collecteur de courant (102)/ séparateur (104) ou deuxième collecteur de courant (102)/ séparateur (103)/ premier collecteur de courant (101)/ séparateur (104),
5.5 une bande de contact (107, 108) est soudée pour la mise en contact électrique des collecteurs de courant (101 et 102) dans au moins l'une des parties de contact (101b et 102b), ou au moins l'une des parties de contact (101b et 102b) est repliée pour réaliser une bande de contact (107, 108) pour la mise en contact électrique des collecteurs de courant (101 et 102),
**caractérisé en ce que**
5.6 au moins l'un des séparateurs (103 et 104) est renforcé dans au moins une zone à risque (103a, 104a) dans laquelle ledit au moins un séparateur (103 et 104) est adjacent à l'intérieur de l'enroulement d'électrodes/séparateurs à ladite moins une partie de contact (101b et 102b) dans laquelle la bande de contact (107, 108) est soudée, ou à ladite au moins une partie de contact (101b et 102b) repliée pour réaliser une bande de contact (107, 108), le renforcement étant formé par le pliage du séparateur.

6. Pile bouton, comprenant un enroulement électrodes/séparateurs (100) selon la revendication 5.
